Europäisches Patentamt

European Patent Office

Office européen des brevets

(11) Veröffentlichungsnummer: **0 433 934 A1**

## (12) EUROPÄISCHE PATENTANMELDUNG

(21) Anmeldenummer: 90124353.5

(22) Anmeldetag: 15.12.90

(51) Int. Cl.5: **A61C 13/225**

(30) Priorität: 16.12.89 DE 8914798 U

(43) Veröffentlichungstag der Anmeldung:
26.06.91 Patentblatt 91/26

(84) Benannte Vertragsstaaten:
**BE CH DE FR IT LI NL**

(71) Anmelder: Obersat, Adam
Logenstrasse 4

W-6750 Kaiserslautern(DE)

(72) Erfinder: Obersat, Adam
Logenstrasse 4
W-6750 Kaiserslautern(DE)

(74) Vertreter: Bernhardt, Winfrid, Dr.-Ing.
Kobenhüttenweg 43
W-6600 Saarbrücken(DE)

(54) Riegelelement, insbesondere für eine abnehmbare Zahnprothese.

(57) Ein Riegelelement (1,2) besteht aus einem in einem flachen Hohlraum (5) angeordneten Federelement (1) und einem an einer offenen Schmalseite des Hohlraumes (5) herausragenden Rastelement (2), das zum Einrasten hinter einem Gegenlager (8) unter Anspannung des Federelementes (1) in den Hohlraum (1) zurückschiebbar ist. Das Federelement besteht aus einem innerhalb der Höhe des flachen Hohlraumes (5) gebogenen Plättchen. Es ist z.B. nur leicht gebogen in Richtung eines C-förmigen oder S-förmigen Längsschnitts. Es kann auch ein wellenförmiges oder zickzackförmiges Blech sein.

Das Riegelelement ist vorgesehen zum Sichern eines herausnehmbaren Zahnprothesenteils (0) an einem festsitzenden Zahnprothesenteil (6) in einer Verbindung der beiden Zahnprothesenteile, in der die beiden Zahnprothesenteile ineinanderschiebbar und in der Endstellung mittels des, an dem herausnehmbaren Zahnprothesenteil (6) angeordneten und in eine Kerbe (8) des festsitzenden Zahnprothesenteils (6) federnd einrastenden, Rastelementes (2) gesichert sind.

Fig. 1

EP 0 433 934 A1

## "RIEGELELEMENT, INSBESONDERE FÜR EINE ABNEHMBARE ZAHNPROTHESE"

Die Erfindung betrifft ein Riegelement, das durch ein in einem flachen Hohlraum angeordnetes Federelement und ein an einer offenen Schmalseite des Hohlraumes herausragendes Rastelement gebildet ist, das zum Einrasten hinter einem Gegenlager unter Anspannung des Federelementes in den Hohlraum zurückschiebbar ist, insbesondere zum Sichern eines herausnehmbaren Zahnprothesenteils an einem festsitzenden Zahnprothesenteil in einer Verbindung der beiden Zahnprothesenteile, in der die beiden Zahnprothesenteile ineinanderschiebbar und in der Endstellung starr, aber lösbar zusammengesetzt sind und mittels des, an dem herausnehmbaren Zahnprothesenteil, vorzugsweise an seiner Hinterseite, angeordneten und hinter dem Gegenlager, vorzugsweise in eine Kerbe, des festsitzenden Zahnprothesenteils federnd einrastenden, Rastelementes gesichert sind.

Ein solches Riegelelement ist aus der EP-A-O 136 671 und der EP-A-O 263 235 bekannt. Nach der ersteren Schrift ist das Federelement nur innerhalb der Ebene des flachen Hohlraumes, und zwar mindestens etwa U-förmig, vorzugsweise S-förmig, gebogen. Diese Feder ist mit ihren kleinen Abmessungen nicht einfach herzustellen und schwer zu handhaben. Nach der letzteren Schrift besteht das Federelement im wesentlichen aus einem Silikonkautschukblock, dessen Frontseite mit einem abriebfesten, metallischen Rastelement, ggf. mit einer drehbar gelagerten Walze, ausgerüstet ist. Dadurch, daß der Silikonkautschukblock den Führungskasten möglichst vollständig ausfüllt, soll das Eindringen von Speichel und Speiseresten, die in Fäulnis oder Gärung übergehen könnten, verhindert werden.

Die Erfahrung hat jedoch gezeigt, daß hier die Federeigenschaften, aber auch die hygienischen Eigenschaften des Silikonkautschuks verbesserungsbedürfig sind.

Der Erfindung liegt die Aufgabe zugrunde, ein einfacher als die innerhalb der Ebene gebogene Feder herstellbares und montierbares Federelement zu schaffen, das aber gleichfalls genug und genau federt und die Verwendung hygienisch unbedenklicher Materialien erlaubt.

Gemäß der Erfindung wird dieser Zweck mit einem Federelement erfüllt, das aus einem innerhalb der Höhe des flachen Hohlraumes gebogenen und/oder sich ausbiegenden Plättchen besteht.

Das Plättchen kann aus einem Kunststoff oder aus Metall bestehen. Besteht es aus Kunststoff, so kann dieser mit einer geringen Härte gewählt werden, so daß das Plättchen sich zusätzlich zu seiner Verbiegung in sich stauchen kann. In diesem Falle wird das Plättchen wegen seiner Weichheit eine verhältnismäßig große Dicke haben, beispielsweise von 1/4 bis 1/2 der Kastenhöhe.

Das Plättchen kann aber durchaus auch nur mit seiner Verbiegung federn, und zwar auch dann, wenn es nur ganz leicht gebogen ist, beispielsweise in Richtung C- oder S-Form, oder wenn es im entspannten Zustand überhaupt nicht gebogen ist. Eine Art Biegung wäre auch eine Prägung des Plättchens; ebenso wie eine Biegung auf der ganzen Breite würde sie die weitere Verbiegung des Plättchens vorgeben.

Ein geeigneter Kunststoff ist Polyvinylchlorid.

Andererseits ist auch eine starke und vielfache Biegung möglich, d.h. auf einer Wellenlinie oder Zickzacklinie.

So kann das Federelement beispielsweise aus einem höchstens auf der Höhe, die der flache Hohlraum hat, auf und ab gebogenen oder gewinkelten Blech bestehen.

Metallblech kann praktisch beliebig dünn gewalzt werden, so daß zusammen mit der Breite des Federelementes eine beliebig kleine, aber auch eine größere Federkraft genau einstellbar ist.

Beispielsweise läßt sich ein Federelement aus einem 0,05 mm oder weniger dicken Blech in einem Hohlraum von 0,4 mm Höhe oder weniger auf- und abbiegen.

Dabei ist ein solches Federelement im Vergleich zu der erwähnten innerhalb der Ebene gebogenen Feder kompakt.

Auch aus Kunststoff wäre ein gewelltes oder zickzackförmiges Federelement denkbar.

In jedem Falle ergeben sich die Vorteile, daß sich das den Hohlraum nur teilweise ausfüllende Federelement in seinem Hohlraum völlig unbehindert, d.h. praktisch reibungsfrei, elastisch verformen kann, wodurch die Halte- und Lösekräfte einwandfrei definiert und reproduziert werden können.

Um die Abnutzung zwischen festsitzendem und herausnehmbarem Prothesenteil insbesondere im Bereich des Riegelelementes zu verringern und gleichzeitig die Halte- und Lösekräfte noch exakter definieren zu können, empfiehlt es sich, das Rastelement als hohlen Rotationskörper - Zylinder, Tonne, Kugelabschnitt - auszubilden, der auf ein Drahtstück als Achse aufgesteckt ist, wobei beide Enden der Achse in dem Federelement verankert sind.

Die Vorteile dieser Ausgestaltung bestehen in einer minimalen Reibung zwischen dem hohlen Rotationskörper und der Drahtachse, ferner in der Möglichkeit, in den inneren Hohlraum des Rotationskörpers eingedrungene Speisereste durch einfaches Drehen desselben zu lockern und anschließend mit Wasser oder Luft auszuspülen. Vorteilhafterweise sind die Enden der Achse mit widerhakenartigen Retentionsmitteln versehen.

Die Zeichnungen geben Ausführungsbeispiele der Erfindung wieder.

Fig. 1      zeigt ein Anwendungsbeispiel eines Riegelelementes in einer Zahnprothese.

Fig. 2      zeigt ein anderes Riegelelement für eine Zahnprothese in einem senkrechten Längsschnitt.

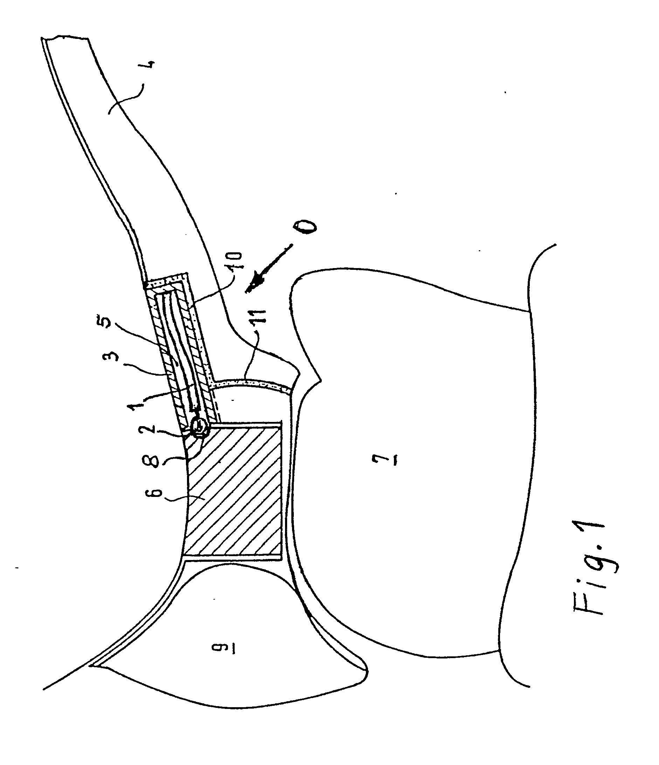

Die Fig. 1 zeigt den linken Abschnitt einer Zahnprothese O, deren Verbindungsbügel 4 zum rechten Abschnitt der Prothese abgebrochen dargestellt ist. Die Prothese O ist auf einen Balken 6 aufgesteckt, der mit zwei Zahnkronen (in der Zeichnung nicht sichtbar) fest verbunden ist. Die Prothese O bietet dem dargestellten Zahn 7 des Unterkiefers eine Gegenfläche und ist außen mit einer Verblendung 9 aus Kunststoff oder Keramik versehen.

Nahe der Unterseite der Zahnprothese O ist ein flacher Führungskasten 3 mit Hilfe einer Lotschicht 10 eingelötet. In den Hohlraum 5 des Führungskastens 3 ist ein Riegelelement eingesetzt, welches aus einem Federelement 1, welches als flaches Parallelepiped geformt ist, und einem Rastelement 2, welches als hohler Rotationskörper, der auf ein Drahtstück als Achse aufgesteckt ist, gebildet ist. Die Enden der Achse sind in dem Federelement 1 verankert, wozu sie mit widerhakenartigen Retentionsmitteln versehen sein können.

Das Federelement 1 besteht aus Metall oder aus Kunststoff, insbesondere aus Polyvinylchlorid. Um das Einfedern zu erleichtern, ist es als flaches S vorgeformt, wobei allerdings auch andere Formen, beispielsweise C-Form, denkbar sind. Dadurch, daß das Federelement 1 den Hohlraum 5 im Führungskasten 3 nur teilweise ausfüllt, kann es ausreichend weit durchfedern, so daß einerseits definierbare Halte- und Lösekräfte, andererseits eine nur geringe Belastung der Feder mit daraus resultierender langer Lebensdauer erreicht werden können.

Es versteht sich, daß als Rastelement nicht nur ein auf die Achse aufgesteckter Rotationskörper, sondern auch andere Konstruktionen aus abriebfesten Materialien grundsätzlich geeignet sind.

Das Federelement 1 und das Rastelement 2 lassen sich leicht aus dem Führungskasten 3 herausnehmen, beispielsweise um eingedrungene Speise- und Speichelreste ausspülen zu können.

Im Balken 6 ist eine Rastkerbe 8 vorgesehen, in die der Hohlzylinder 2 einrastet, sobald die abnehmbare Zahnprothese O ihre Endstellung erreicht hat. Dank des leichtgängigen Rollens des Rastelementes ist der Verschleiß beim Einsetzen und Herausnehmen der abnehmbaren Zahnprothese 0 gering und es können definierte Halte- und Lösekräfte erreicht werden. Dank der geringen Höhe des Riegelelementes 1, 2 ist es möglich, dieses zusammen mit dem flachen Führungskasten 3 in die abnehmbare Zahnprothese 0 und weitgehend sogar in den Verbindungsbügel 4 zu integrieren, wobei noch ausreichend Platz für den Verbindungsbügel 4 mit weiteren Prothesenteile verbindenden Klebe- oder Lötschichten 10, 11 verbleibt.

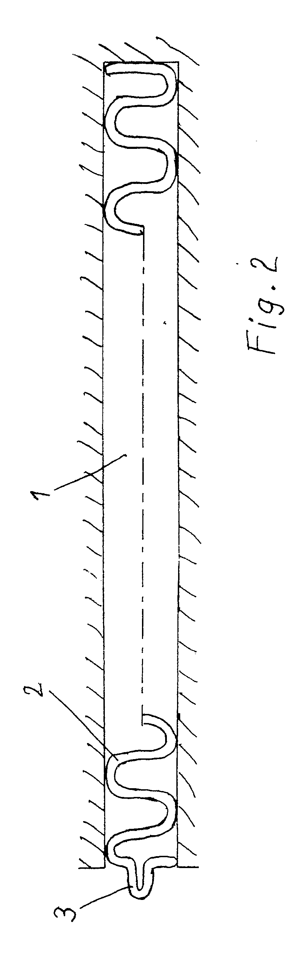

Bei dem Ausführungsbeispiel gemäß Fig. 2 sitzt in einem flachen Hohlraum 1 ein Federelement 2, das aus einem wellenförmig auf und ab gebogenen Blech einer Breite beispielsweise von 1/4 bis 1/2 der Federlänge besteht. Das Federelement 2 ist mit seinem hinteren Ende gegen die Rückwand des Hohlraumes 1 abgestützt. Am vorderen Ende geht es in ein, gleichfalls aus dem Federblech geformtes, Rastelement 3 über. Dieses ragt aus dem Hohlraum 1 heraus. Der Hohraum 1 befindet sich beispielsweise in einem abnehmbaren Zahnprothesenteil, das mittels eines Geschiebes auf ein festsitzendes Zahnprothesenteil aufsetzbar ist. In dem festsitzenden Zahnprothesenteil ist eine Kerbe ausgebildet, in die das Rastelement 3 in der eingesetzten Stellung der Zahnprothese einrastet.

Statt des an das Federelement 2 angeformten Rastelements 3 wäre auch ein getrennt hergestelltes und in dem Hohlraum 1 geführtes Riegelelement irgendwelcher Art möglich, mit dem die Feder 2 vorzugsweise verbunden ist.

## Ansprüche

1.   Riegelelement (1,2 bzw. 2,3), das durch ein in einem flachen Hohlraum (5 bzw. 1) angeordnetes Federelement (1 bzw. 2) und ein an einer offenen Schmalseite des Hohlraumes (5 bzw. 1) herausragendes Rastelement (2 bzw. 3) gebildet ist, das zum Einrasten hinter einem Gegenlager (8) unter Anspannung des FEderelementes (1 bzw. 2) in den Hohraum (1) zurückschiebbar ist,

insbesondere zum Sichern eines herausnehmbaren Zahnprothesenteils (0) an einem festsitzenden Zahnprothesenteil (6) in einer Verbindung der beiden Zahnprothesenteile, in der die beiden Zahnprothesenteile ineinanderschiebbar und in der Endstellung starr, aber lösbar zusammengesetzt sind und mittels des, an dem herausnehmbaren Zahnprothesenteil (6), vorzugsweise an seiner Hinterseite, angeordneten und hinter dem Gegenlager, vorzugsweise in eine Kerbe (8), des festsitzenden Zahnprothesenteils (6) federnd einrastenden, Rastelementes (2 bzw. 3) gesichert sind,

dadurch gekennzeichnet,

daß das Federelement (1 bzw. 2) aus einem innerhalb der Höhe des flachen Hohlraumes (5 bzw. 1) gebogenen und/oder sich ausbiegenden Plättchen besteht.

2. Riegelement nach Anspruch 1,
dadurch gekennzeichnet,
daß das Federelement (1) leicht gebogen ist in Richtung C-förmigen oder S-förmigen Längsschnitts.

3. Riegelelement nach Anspruch 1,
dadurch gekennzeichnet,
daß das Federelement geprägt ist.

4. Riegelelement nach einem der Ansprüche 1 bis 3,
dadurch gekennzeichnet,
daß das Federelement (1) aus Kunststoff, vorzugsweise Polyvinylchlorid, besteht.

5. Riegelelement nach Anspruch 1,
dadurch gekennzeichnet,
daß das Federelement (2) aus einem höchstens auf der Höhe, die der flache Hohlraum (1) hat, auf und ab gebogenen oder gewinkelten Blech besteht.

Fig.1

Fig. 2

Europäisches
Patentamt

**EUROPÄISCHER RECHERCHENBERICHT**

Nummer der Anmeldung

EP 90124353.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| D,A | EP - A2/A3 - 0 136 671<br>(OBERSAT, ADAM)<br>* Zusammenfassung *<br>-- | 1 | A 61 C 13/225 |
| D,A | EP - A1 - 0 263 235<br>(OBERSAT, ADAM)<br>* Zusammenfassung *<br>---- | 1 | |

|   |   |
|---|---|
| | RECHERCHIERTE SACHGEBIETE (Int Cl⁵) |
| | A 61 C |

Der vorliegende Recherchenbericht wurde für alle Patentansprüche erstellt

| Recherchenort | Abschlußdatum der Recherche | Prüfer |
|---|---|---|
| WIEN | 22-02-1991 | HEIN |

KATEGORIE DER GENANNTEN DOKUMENTEN
X   von besonderer Bedeutung allein betrachtet
Y   von besonderer Bedeutung in Verbindung mit einer anderen Veröffentlichung derselben Kategorie
A   technologischer Hintergrund
O   nichtschriftliche Offenbarung
P   Zwischenliteratur
T   der Erfindung zugrunde liegende Theorien oder Grundsätze

E   älteres Patentdokument, das jedoch erst am oder nach dem Anmeldedatum veröffentlicht worden ist
D   in der Anmeldung angeführtes Dokument
L   aus andern Gründen angeführtes Dokument

&   Mitglied der gleichen Patentfamilie, übereinstimmendes Dokument

EPA Form 1503 03 82